# EUROPEAN PATENT SPECIFICATION

(11) **EP 0 324 131 B1**
(45) Date of publication and mention of the grant of the patent: **16.03.1994**
(21) Application number: 88121225.2
(22) Date of filing: 19.12.1988
(51) Int. Cl.: B60R 13/06, E06B 7/23

(54) **Hermetic tight device for motor-vehicles**
Hermetische Dichtungsanordnung für Kraftfahrzeuge
Dispositif d'obturation hermétique pour véhicules automobiles

(30) Priority: 15.01.1988 IT 1907588
(43) Date of publication of application: 19.07.1989
(73) Proprietor: SMAE-SOCIETA' MERIDIONALE ACCESSORI ELASTOMERICI S.p.A, I-84091 Battipaglia (Salerno) (IT)
(72) Inventor: Piccinini, Dino, I-00046 Grotta Ferrata Roma (IT); Arabino, Domenico, I-84100 Salerno (IT)
(74) Representative: Quinterno, Giuseppe

(56) References cited:
- FR-A- 1 491 554
- FR-A- 2 543 250
- GB-A- 905 808
- PATENT ABSTRACTS OF JAPAN vol. 8, no. 253 (M-339)(1690) 11 November 84,& JP-A-59 128030 (NIPPON DENSO) 24 July 84,
- PATENT ABSTRACTS OF JAPAN vol. 11, no. 183 (M-598)&& JP-A-62 012416 (TOKAI KOGYO KK) 21 January 87,

## Description

This invention relates to a hermetiC tight device for motor-vehicle comprising a plurality of sealing strips extending along the perimeter of the rabbet edges of respective doors on a body of a motor-vehicle, each of said sealing strips presenting a sealing portion in elastically deformable material designed to be compressed and elastically deformed between one of the rabbet edges of the body and an edge of the respective door to exercise a hermetic thightness between the same, said sealing portion having a tubular shape, hermetically closed with respect to the outer environment, and being served by operating means for passing from a first rest configuration, wherein the sealing strip is deflated, to a second work configuration, wherein the sealing strip is inflated with operative fluid, at least a cross section of said sealing portion presenting zones with differentiated thickness.

The hermetic tight device according to the invention is particularly designed to be utilized on motor-cars of considerable value in order to ensure the hermetic tight between doors and body also at high speeds. This however does not exclude the possibility of utilizing the device in reference also on other motor-vehicles.

As known, it is necessary to ensure a hermetic tight, in the motor-vehicles, between the perimeter of the doors edges and the corresponding rabbet edges obtained on the body of the motor-vehicle.

In such a connection, proper rubber sealing strips or sealing strips made of other material elastically deformable are presently adopted; said sealing strips are fixed along the perimeter of the rabbet edges of the body and destined to be compressed between the same rabbet edges and the edges of the respective door, when this latter is closed.

The sealing strips, generally having a tubular section communicating with the outer environment, can present zones having differentiated thickness both in order to be able to follow the numerous curvatures along the edges perimeter of the body without undergoing superficial wrinkling and to present zones of preferential deformation to ensure a better hermetic tight when the sealing strips are compressed between the door and the body.

The sealing strips above described, although proved satisfactory in most situations, cause some problems.

A first problem is the necessity of having relatively small tolerances in relation to the coupling between doors and body of the motor-vehicle.

In fact, particularly when the doors have a considerable length, also a little mistake in the hinges coupling, can cause that the door edges farther from the same hinges do not precisely go on rabbet on the sealing strip, seriously jeopardizing the hermetic tight in these zones.

The perfect hermetic tight may also be compromised when, during the running of the motor-vehicle at high speed, the aerodynamic depressures that arise along the sides and in the rear part of the same motor-vehicle tend to move the doors farther from the body. This can cause, in some points, a disengagement between the edge of the door and the sealing strip, provoking annoying whilstings due to infiltrations of air and, in case of rain, to the entrance of water inside the motor-vehicle.

Another kind of sealing strip is described in documents FR-A-2543250 and JP-A-59128030. These sealing strips are able to obtain a better hermetic tightness between the doors and the corresponding rabbet edge than the ones mentioned before, because their tubular section are inflatable when the same doors are closed. In particular, these strips are closed with respect to the outer environment and are controlled by operating means to reach and maintain a prestablished inner pressure.

These strips shown a constant thickness in their cross section.

It is also known from GB-A-905808 and FR-A-1491554 an inflatable sealing strip whose cross section presents a poligonal profile with different thickness. These sealing strips, however, present constant thickness along the longitudinal development thereof.

The object of the present invention is to resolve the draw-backs of the conventional tecnique realizing a device able to ensure, in any situation, the perfect hermetic tight between doors and body of a motor-vehicle without however require high coupling tolerances between doors and body.

This aim and others, which will be more apparent in the following description, will be substantially achieved by a hermetic tight device for motor vehicles characterized by the fact that in the corner zones of the rabbet edge, where the sealing strip presents variations of curvature, the thickness of the sealing portion gradually varies in longitudinal section, said thickness, in the same cross section, being differentiated to dilate mostly in a determined direction.

Further characteristics and advantages will be better apparent from the following detailed description of a preferred but not exclusive embodiment of a hermetic tight device for motor-vehicles according to the present invention herebelow given only by way of example, with reference to the accompanying drawings, in which:
- Fig.1: is an electro-pneumatic scheme of the device according to the invention applied on a motor-vehicle;
- fig.2: is a cross-section of the sealing strip interposed between the rabbet edge of the body and the edge of the door of the motor-vehicle.

With reference to the cited figures, with 1 has been globally described a hermetic tight device for motor-vehicles according to the present invention.

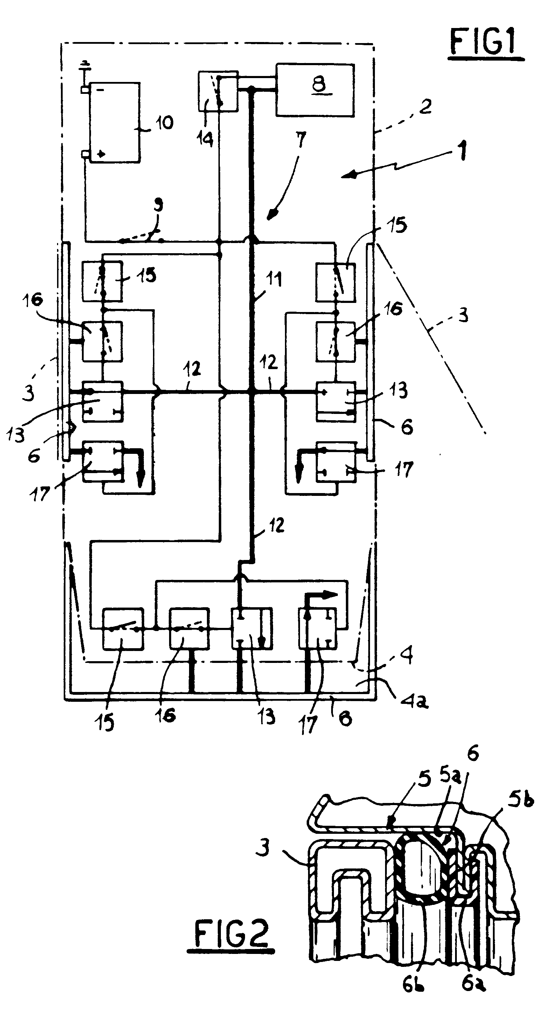

In the example schematically given in figure 1, the device 1 is combined with a motor-car 2 having two lateral doors 3 that allow the admittance to the slum dwelling of the motor-car and a rear door 4 combined with a trunk 4a.

In a conventional manner, it is foreseen that a hermetic tight is realized between the doors 3 and 4 and the body 5 of the motor-car 2, when the doors 3 and 4 are in closing condition.

In such a connection, it is foreseen a sealing strip 6 for each doors 3 and 4, said sealing strip 6 being extending according to the length of a rabbet edge 5a obtained on the body 5.

On its turn, the rabbet edge 5a is substantially shaped according to the perimeter length of the respective door 3,4.

More in particular, each sealing strip 6 has a fastening portion 6a engaged, through a forced insertion, on a wing 5b presented by the body 5 and a sealing portion 6b made of elastically deformable material, integral to the fastening portion 6a and designed to be compressed and elastically deformed according to what shown in figure 2, between the rabbet edge 5a and the perimeter edge of the door 3,4 to exercise a hermetic tight between the same.

Originally and advantageously, according to the present invention, the fastening portion 6b of the sealing strip 6 has a tubular section hermetically closed in respect to the outer environment.

The isolation of the inner part from the outer environment of the sealing portion 6b can be obtained hermetically closing the opposed ends of the same sealing portion, or hermetically welding such ends so that the sealing strip 6 takes a length of a closed ring.

Operating means globally marked with 7 are combined with the sealing strips 6; said means act in order to inflate the sealing portions 6b with operative fluid, preferably air, till to reach and maintain a determined pressure inside the same sealing portions.

In the example given, the operating means 7 comprise an electrical compressor 8 which may be put in action by using the main switch 9 connected to a battery 10 conventionally foreseen in the motor-car 2.

The switch 9 is preferably constituted by the conventional ignition group situated on the motor-car dash board, whose activation is obtained by using the ignition key.

The installation might also function with the panel disconnected provided that a suitable feeding is ensured by the battery.

A conduit of main delivery 11, to which respond secondary delivery conduits 12, each of them communicating with the inside of one of the sealing strips 6 through a feeding solenoid valve 13, is connected to the compressor 8.

A pressure switch 14 of maximum value is associated to the compressor 8; said pressure switch is operating in order to interrupt the electrical feeding to the compressor 8, when in the conduit of main delivery 11 a determined pressure value is reached.

Each solenoid valve 13 is excitable by putting in action a secondary switch 15 connected in series with the main switch 9 and operating in order to electrically feed the same solenoid valve in connection with the closure of the corresponding door 3, 4.

When the solenoid valve 13, as shown in figure 1 with reference to the right doors 3 and doors 4 of the luggage car 4a, is not energized the communication of fluid between the auxiliary delivery conduit 12 and the sealing portion 6b of the corresponding sealing strip 6 is interrupted.

Vice versa (as illustrated in figure 1 with reference to the left door 3) when the solenoid valve 13 is energized, in connection with the closure of the door 3 and so of the switch 15, the auxiliary delivery conduit 12 is connected to the inside of the respective sealing portion 6b.

Preferably, any solenoid valve 13 is also served by an auxiliary pressure switch 16 which operates in order to interrupt the electrical feeding provoking the consequent lack of energy, when the pressure inside the sealing portion 6b reaches a pre-established value, preferably slightly lower than the calibration value of the main pressure switch 14.

Besides, it is foreseen that a discharge solenoid valve 17, which is excitable too, is combined with each sealing strip 6 in connection with the closure of the respective secondary switch 15. When the discharge solenoid valve 17 is not energized, the sealing portion 6b is put into communication with the outer environment to determine the discharge of air contained in the same portion.

Vice versa, when the discharge solenoid valve 17 is energized, the discharge of the sealing portion 6b - towards the outer environment - is hermetically closed.

After what above described, in a prevailingly structural manner, the functioning of the device according to the present invention appears the following.

When the motor-car 2 is not utilized, any sealing strip 6 substantially acts as a sealing strip of conventional type.

As a matter of fact, the sealing strip 6 appears connected with the outer environment through the discharge solenoid valve 17 and compressed between the rabbet edge 5a and the perimeter edge of the corresponding door 3, 4.

During the motor-car starting, the main switch 9 is closed and, consequently, the compressor 8 is put in action, said compressor sending air in the main delivery conduits 11 and the auxiliary 12.

If the doors 3 and 4 are open, the secondary switches 15 do not energize the solenoid valves 13; this lacking of energy in the solenoid valves 13 forbides to the air sent through the delivery conduits 12 to reach the inner cavities of the sealing strips 6.

Consequently, the pressure inside the main delivery conduits 11 and the auxiliary 12 goes up to determine the disengagement of the compressor 8 by the main pressure switch 14.

When one of the doors 3 or 4 is closed, the closure of the respective secondary switch 15 gives energy to the solenoid valves 13 and 17.

The inner cavities of the sealing portion 6b are so isolated from the outer environment and connected to the auxiliary delivery conduit 12.

By this way, the air sent in said auxiliary delivery conduit can inflate the sealing strip 6.

The consequent fall of pressure inside the main delivery conduits 11 and the auxiliary 12 put in action again the compressor 8, by order of the main pressure switch 14.

When the pressure inside the sealing strip 6 has reached a pre-established value, the auxiliary pressure switch 16 determined the lack of energy of the solenoid valve 13.

The sealing strip 6 remains hermetically closed in respect to the outer environment and inflated with air under pressure.

In this situation, the walls of the sealing portion 6b are compressed against the rabbet edge 5a and the perimeter edge of the respective door 3, 4 in a manner to ensure a perfect hermetic tight also in case that, e.g., the door tends to move away from the body in connection with aerodynamic depressions.

As a matter of fact, even if the door 3, 4 is moving away from the rabbet edge 5a, the pressure existing inside the sealing portion 6b determines a walls dilatation of this latter; the walls are consequently maintained in contact with the respective rabbet edges.

The consequent fall of pressure inside the sealing portion 6b, due to the increase of the inner volume of this latter, gives energy to the solenoid valve 13 due to the action of the auxiliary pressure switch 16, and the eventual activation of the compressor 8 in order to re-establish the working pressure value inside the same sealing portion.

When one of the doors 3 or 4 is newly opened, the aperture of the secondary switch 15 determines the lack of energy both in the solenoid valve 13 and in the discharge solenoid valve 17.

In this manner, the compressed air in the sealing portion 6b is evacuated in the outer environment to avoid to ostaculate the subsequent closure of the same door.

The aims of the present invention are reached.

As appears from what described above, it is easy to understand that the device in reference proves to be able to ensure a perfect hermetic tight also in case in which the doors tend to be moved away from the body due to the aerodynamic depressions which occurr along the sides of the rear part of the motor-car when this latter runs at high speed.

In this manner the draw-back caused by the aerodynamic noises and/ or infiltrations of water during the run at high speed is eliminated.

Besides, thanks to the possibility of dilatation offered by the sealing portions 6b, the device in reference is able to ensure a perfect hermetic tight although the coupling between doors and body is not extremely precise.

In particular, it may be foreseen that the section of the sealing portions 6b presents zones having differentiated thickness in order to give to the same sealing portion, when it is inflated, the tendency to dilatation in a determined direction.

Besides, any sealing strips 6 may be realized with the consecutive union of more lengths, each presenting a different section in the sealing portion 6b, in order to meet the needs arising from the different working conditions of the sealing strips along the various lengths of the perimeter of the rabbet edge 5a.

## Claims

1. Hermetic tight device (1) for motor-vehicles (2) comprising a plurality of sealing strips (6) extending along the perimeter of the rabbet edges (5a) of respective doors (3, 4) on a body (5) of a motor-vehicle (2), each of said sealing strips (6) presenting a sealing portion (6b) in elastically deformable material designed to be compressed and elastically deformed between one of the rabbet edges (5a) of the body (5) and an edge of the respective door (3, 4) to exercise a hermetic thightness between the same, said sealing portion (6b) having a tubular shape, hermetically closed with respect to the outer environment, and being served by operating means (7) for passing from a first rest configuration, wherein the sealing strip is deflated, to a second work configuration, wherein the sealing strip is inflated with operative fluid, at least a cross section of said sealing portion (6b) presenting zones with differentiated thickness, characterized by the fact that in the corner zones of the rabbet edge where the sealing strip presents variations of curvature, the thickness of the sealing portion gradually varies in longitudinal section, said thickness, in the same cross section, being differentiated to dilate mostly in a determined direction.

2. Device according to claim 1, characterized in that said operating means (7) comprise at least a compressor (8), a plurality of feeding solenoid valves(13), each of them being associated to a sealing strip (6) that can be energized in connection with the closure of the respective door (3,4) in order to put the compressor in communication of fluid with the inside of the sealing portion (6b), a plurality of discharge solenoid valves (17), each of them puts in communication the sealing portion (6b) of the respective sealing strip (6) with the outer environment and it is subjected to be energized in connection with the closure of the corresponding door to hermetically close the sealing portion in respect to the outer environment and a plurality of pressure switches (16), each of them being combined with one of said first solenoid valves to have them without energy and interrupt the communication of fluid between the inner portion of the respective sealing strip and the compressor when a pre-established pressure value has been reached in the inner portion.

## Patentansprüche

1. Hermetische dichte Vorrichtung (1) für Kraftfahrzeuge (2), umfassend eine Mehrzahl Dichtungsstreifen (6), die längs des Umfangs der Falzränder (5a) entsprechender Türen (3, 4) einer Karosserie (5) eines Kraftfahrzeugs (2) verlaufen, wobei jeder der Streifen (6) einen Dichtungsabschnitt (6b) aus elastisch verformbarem Material aufweist, der ausgelegt ist, um zwischen einem der Falzränder (5a) der Karosserie (5) und einem Rand der entsprechenden Tür (3, 4) zusammengedrückt und elastisch verformt zu werden, um eine hermetische Dichtigkeit zwischen diesen auszuüben, wobei der Dichtungsabschnitt (6b) rohrförmige Gestalt aufweist, relativ zur äußeren Umgebung hermetisch geschlossen ist und durch Betätigungsmittel (7) beschickt ist, um aus einer ersten Ruhestellung, in welcher der Dichtungsstreifen entleert ist, in eine zweite Arbeitsstellung überzugehen, in welcher der Dichtungsstreifen mit Betriebsfluid gefüllt ist, wobei wenigstens ein Querschnitt des Dichtungsabschnitts (6b) Bereiche differenzierter Dicke aufweist, dadurch gekennzeichnet, daß in den Eckbereichen der Falzränder, wo der Dichtungsstreifen Krümmungsänderungen aufweist, die Dicke des Dichtungsabschnitts im Längsschnitt allmählich variiert, wobei die Dicke im gleichen Querschnitt derart differenziert ist, daß er sich hauptsächlich in eine bestimmte Richtung ausdehnt.

2. Vorrichtung nach Anspruch 1, dadurch gekennzeichnet, daß die Betätigungsmittel (7) wenigstens umfassen einen Kompressor (8), eine Mehrzahl Zufuhrsolenoidventile (13), von denen jedes einem Dichtungsstreifen (6) zugeordnet ist und die in Verbindung mit dem Schließen der entsprechenden Tür (3, 4) erregt werden können, um den Kompressor in Fluidverbindung mit der Innenseite des Dichtungsabschnitts (6b) zu setzen, eine Mehrzahl Auslaßsolenoidventile (17), von denen jedes den Dichtungsabschnitt (6b) des jeweiligen Dichtungsstreifens (6) mit der äußeren Umgebung in Verbindung setzt und in Verbindung mit dem Schließen der entsprechenden Tür Erregung unterworfen ist, um den Dichtungsabschnitt relativ zur äußeren Umgebung zu schließen, und eine Mehrzahl Druckschalter (16), von denen jeder mit einem der ersten Solenoidventile kombiniert ist, um diesen zu entregen und die Fluidverbindung zwischen dem Innenabschnitt des jeweiligen Dichtungsstreifens und dem Kompressor zu unterbrechen, wenn ein vorbestimmter Druckwert in dem Innenabschnitt erreicht worden ist.

## Revendications

1. Dispositif hermétique (1) pour véhicule à moteur (2) comprenant plusieurs profilés d'étanchéité (6) disposés le long de la périphérie de bords (5a) à feuillure de portes respectives (3, 4) placées sur une carrosserie (5) d'un véhicule à moteur (2), chacun des profilés d'étanchéité (6) ayant une partie d'étanchéité (6b) formée d'un matériau élastiquement déformable destiné à être comprimé et déformé élastiquement entre l'un des bords à feuillure (5a) de la carrosserie (5) et un bord de la porte respective (3, 4) afin qu'une coopération hermétique soit obtenue entre elles, la partie d'étanchéité (6b) ayant une forme tubulaire fermée hermétiquement par rapport au milieu externe et étant desservie par un dispositif de commande (7) destiné à la faire passer d'une première configuration de repos dans laquelle le profilé d'étanchéité est dégonflé à une seconde configuration de travail dans laquelle le profilé d'étanchéité est gonflé par un fluide de travail, une section au moins de la partie d'étanchéité (6b) présentant des zones d'épaisseurs différentes, caractérisé par le fait que, dans les zones des coins du bord à feuillure dans lequel le profilé d'étanchéité présente des variations de courbure, l'épaisseur de la portion d'étanchéité varie progressivement dans la direction longitudinale, cette épaisseur, pour la même section, étant différentiée afin qu'elle présente une dilatation surtout dans une direction prédéterminée.

2. Dispositif selon la revendication 1, caractérisé en ce que le dispositif de commande (7) comporte au moins un compresseur (8), plusieurs électrovannes (13) d'alimentation associées chacune à un profilé d'étanchéité (6) qui peut être excité lors de la fermeture de la porte respective (3, 4) afin que le compresseur communique avec l'intérieur de la partie d'étanchéité (6b), plusieurs électrovannes (17) d'évacuation, chacune d'elles mettant en communication la partie d'étanchéité (6b) du profilé respectif d'étanchéité (6) avec le milieu externe et étant excitée lors de la fermeture de la porte correspondante afin que la partie d'étanchéité soit fermée hermétiquement par rapport au milieu externe, et plusieurs interrupteurs manosensibles (16) combinés chacun à l'une des premières électrovannes afin que celle-ci ne reçoive pas l'énergie et interrompe la communication du fluide entre la partie interne du profil respectif d'étanchéité et le compresseur lorsqu'une valeur préétablie de la pression a été atteinte dans la partie interne.
